## Europäisches Patentamt
## European Patent Office
## Office européen des brevets

(19)

(11) Veröffentlichungsnummer : **0 036 041**
**B1**

(12) **EUROPÄISCHE PATENTSCHRIFT**

(45) Veröffentlichungstag der Patentschrift :
**15.08.84**

(51) Int. Cl.³ : **F 24 J   3/02**

(21) Anmeldenummer : **80107655.5**

(22) Anmeldetag : **05.12.80**

(54) **Wärmetauscher für Hausdächer, Fassaden, Zäune oder dergleichen.**

(30) Priorität : **19.03.80 DE 3010523**

(43) Veröffentlichungstag der Anmeldung :
**23.09.81 Patentblatt 81/38**

(45) Bekanntmachung des Hinweises auf die Patenterteilung : **15.08.84 Patentblatt 84/33**

(84) Benannte Vertragsstaaten :
**AT BE CH FR GB IT LI LU NL SE**

(56) Entgegenhaltungen :
**CH-A-   580 734**
**DE-A- 2 731 587**
**DE-A- 2 913 490**
**FR-A- 2 394 648**
**US-A- 3 711 130**
**US-A- 4 098 261**
**US-A- 4 187 901**

(73) Patentinhaber : **VEREINIGTE ALUMINIUM-WERKE AKTIENGESELLSCHAFT**
**Georg-von-Boeselager-Strasse 25**
**D-5300 Bonn 1 (DE)**

(72) Erfinder : **Dick, Günter**
**Sperlingsweg 4**
**D-5204 St. Augustin (DE)**
Erfinder : **Griep, Winfried**
**Kirchfeldstrasse 1**
**D-5300 Bonn 3 (DE)**

(74) Vertreter : **Müller-Wolff, Thomas, Dipl.-Ing.**
**c/o Vereinigte Aluminium-Werke AG Patentabteilung**
**Postfach 2468**
**D-5300 Bonn 1 (DE)**

Jouve, 18, rue St-Denis, 75001 Paris, France

## Beschreibung

Die Erfindung betrifft einen Wärmetauscher für Hausdächer, Fassaden, Zäune oder dergleichen mit einem Wärmetauscherblech und mindestens einem Wärmetauscherrohr.

Nach US-A-4,098,261 ist ein Wärmetauscher bekannt, der aus einem Wärmetauscherblech und mindestens einem Wärmetauscherrohr besteht, wobei das Wärmetauscherrohr in einem T-profilähnlichen Strangpreßprofil gehalten ist, dessen Flanschebene als Kontaktfläche ausgebildet ist. Das Strangpreßprofil kann mit dem Blech über eine Zwischenlage verbunden sein.

Übliche Herstellungsverfahren für Fassadenverkleidungen sind das Strangpressen von Metallen, vorwiegend von Aluminiumlegierungen, sowie das Extrudieren von Kunststoffen in Hohlprofilen, siehe DE-U-78 20 719, DE-A-27 15 759, DE-A-25 29 095, DE-A-26 17 040, DE-A-28 04 301. Ferner gibt es die Blech-Rohrbauweise, wobei die Rohre in omegaförmige Nuten des Bleches eingeklemmt werden, siehe DE-A-25 12 226, DE-A-26 33 862, DE-U-75 40 889.

Diese bekannten Bauelemente weisen jedoch Nachteile auf. So erfordern Strangpreßprofile aus preßtechnischen Gründen besonders bei breitflächiger Ausbildung, eine unnötig große Wanddicke, die zur Aufnahme der auftretenden Belastungen nicht benötigt wird und somit unwirtschaftlichen Materialeinsatz darstellt. Der Anschluß der eingepreßten Hohlkanäle an die weiterführenden Verteilerrohre ist hierbei nur durch kostenaufwendige Maßnahmen zu bewerkstelligen. Bei rechteckigen Kanälen im Strangpreßprofil müssen diese erst jeweils endseitig durch Schweißen, Kleben und dergleichen verschlossen werden, um hieran einen Rohranschlußnippel anbringen zu können.

Bei rohrförmigen Kanälen im Strangpreßprofil können endseitig weiterführende Rohre nur dann montiert werden, wenn vorher spezielle Anschlußteile mit Gewinde und entsprechenden Dichtungen eingedreht werden, siehe DE-B-27 56 660, oder Rohrnippel angeschweißt oder eingeklebt werden.

Strangpreßprofilkonstruktionen, insbesondere solche aus Aluminium, erfordern aus ästhetischen Gründen eine relativ teure Oberflächenbehandlung durch Anodisieren oder Stücklackieren. Die sichtbare Oberfläche kann lediglich in Profillängsrichtung durch Anpressen von Rippen oder Noppen optisch aufgelockert werden.

Bei der Rohr-Blechbauweise können Rohre in omegaförmige Nuten des Blechbandes zwar eingeklemmt werden, jedoch führen Fertigungstoleranzen zu Luftspalten und hierdurch zu unvollkommenem Wärmeübergang. Luftspalte zwischen Rohr und Blech können zwar mit Wärmeleitpasten, Klebstoffen oder Bitumen ausgefüllt werden, um den Wärmeübergang zu verbessern und evtl. Spaltkorrosion zu vermeiden, jedoch sind diese kostenaufwendigen Fertigungsvorgänge nur werkseitig und nicht auf der Baustelle duchführbar.

Aluminiumdächer oder -fassaden dürfen aus baubehördlichen Bestimmungen nicht im Originalzustand eingesetzt werden, sondern müssen vorher lackiert oder eloxiert werden. Beim Lackieren unterscheidet man die Stücklackierung vom sogenannten coil-coating-Verfahren, bei dem die Farbe mit Walzen schnell und kostengünstig aufgetragen wird. Das coil-coating-Verfahren ist aber nicht für alle Blechdicken geeignet.

Die ästhetischen Anforderungen an die eingangs genannten Wärmetauscher sind unterschiedlicher Natur. Daher muß das zu entwickelnde System möglichst flexibel an den jeweiligen Käuferwunsch angepaßt werden können. Es muß auch eine asymmetrische Aufteilung der Wärmetauscherflächen möglich sein.

Wie oben erwähnt, sind die im Blech eingeformten Omega-Nuten meist aus ästhetischen Gesichtspunkten unerwünscht, zum anderen müssen alle Anschlußelemente eines Daches oder einer Fassade, die nicht als Wärmetauscherfläche aktiviert sind, ebenfalls aus Anpassungsgründen mit der gleichen Nutenanordnung ausgebildet sein, ohne daß sie zur eigentlichen Aufnahme der Wärmeträgerrohre dienen. Ein weiterer Nachteil besteht darin, daß zur Herstellung derartiger mit Nuten versehener Blechbänder relativ teure spezielle Rollformsätze oder Preßwerkzeuge erforderlich werden. Wärmetauscherplattenelemente, die aus walzplattiertem Material nach dem sogenannten Rollbond- oder Z-Bond-Verfahren hergestellt sind, weisen den Nachteil auf, daß sie aus gut verformbarem Material hergestellt werden müssen und dadurch als belastbare bzw. begehbare Dach- oder Fassadenelemente ohne zusätzliche Aussteifungen kaum einsetzbar sind. Außerdem verlangen Elemente dieser Herstellungsart ebenfalls kostenaufwendige Stücklackierung bzw. Anodisierung, da metallblanke Bleche aus ästhetischen Gründen nicht einsetzbar sind.

Der vorliegenden Neuerung liegt die Aufgabe zugrunde, einfach montierbare und im coil-coating-Verfahren lackierbare, ästhetisch wirkende großflächige Wärmetauscherplattenelemente für Dacheindeckungen, Fassadenverkleidungen, Einzäunungen, Sichtblenden, Sonnenschutzanlagen, Schallschutzwände zu schaffen, die gleichzeitig der Wärmesammlung und der Wärmeabgabe dienen können.

Dies wird erfindungsgemäß dadurch gelöst, daß das Wärmetauscherror aus einem T-profilähnlichen Strangpreßprofil besteht, dessen Flanschebene als Kontaktfläche ausgebildet ist, daß das Strangpreßprofil mit dem Blech über eine elastische Zwischenlage verbunden ist und mit einem federnden Blechstreifen am Wärmetauscherblech befestigt ist, wobei die Enden des federnden Blechstreifens in Sicken des Wärmetauscherblechs eingreifen.

Alternativ kann die Aufgabe auch dadurch gelöst werden, daß das Wärmetauscherblech als Hohlprofil geformt ist, und daß innerhalb des Hohlprofils das Wärmetauscherrohr angeordnet ist, das als Strangpreßprofil nach Art eines Doppel-T-Trägers ausgebildet ist, bei dem das Rohr im Mittelsteg angeornet ist.

Die gemeinsame erfinderische Idee besteht darin, daß zur Herstellung einfach montierbarer, ästhetisch wirkender, großflächiger Wärmetauscherplattenelemente ein Wärmetauscherrohr mit einem Wärmetauscherblech verbunden wird, ohne die sichtbare Oberfläche des Wärmetauscherblechs zu verletzen. Die mechanische Bearbeitung der zu verbindenden Teile wird durch das Andrücken des Strangpreßprofils mittels Federspannung bzw. durch die Verklebung des Doppel-T-Profils im Innern des Hohlprofils vermieden.

Für besondere Anschlußverbindungen ist es vorteilhaft, daß die T-förmigen bzw. doppel-T-förmigen Wärmetauscherrohre an den Enden einen runden Außenumfang aufweisen. Der Rohrteil des T-förmigen bzw. doppel-T-förmigen Wärmetauscherrohres kann unterbrochen werden, wobei in der Unterbrechung des Rohrteiles zweckmäßigerweise ein Anschlußstück befestigt ist.

Die Enden des Strangpreßprofils können mit einem Rohrfitting an einem Verteilerrohr, einem Gummi-Gewebeschlauch oder einem Wellrohr angeschlossen sein.

Im folgenden wird die Erfindung anhand mehrerer Ausführungsbeispiele näher erläutert. Es zeigen :

Figur 1    Befestigung des erfindungsgemäßen Wärmetauscherrohres

Figuren 2 und 3    alternative Befestigung des erfindungsgemäßen Wärmetauscherrohres als Doppel-T-Profil

Figur 4    Wärmetauscher mit rundem Endteil und Werkzeug zur Herstellung

Figuren 5 und 6    Wärmetauscher mit einem angebogenen Rohrendteil

Figuren 7 und 8    Wärmetauscher mit einem zwischengeschalteten Rohranschlußstück

Figuren 9, 10 und 11    verschiedene Wärmetauscheranschlußarten.

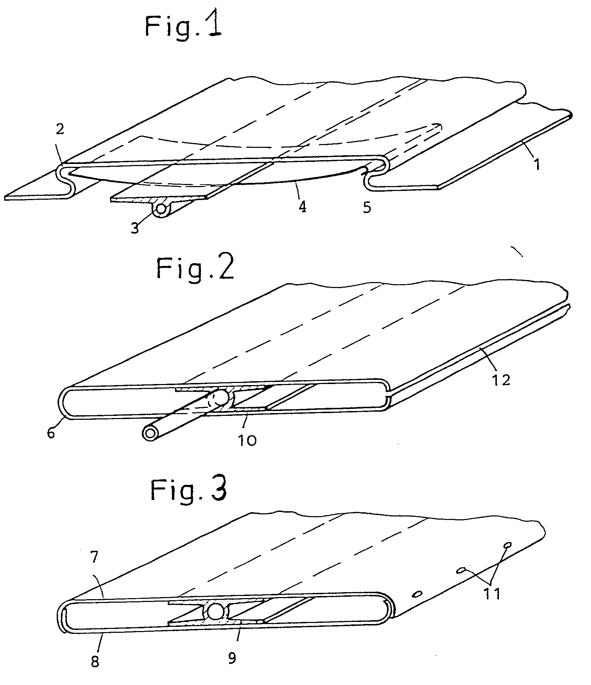

In Fig. 1 ist ein rollgeformtes Wärmetauscherblech 1 dargestellt, in dessen Sicken 2 ein Strangpreßprofil 3 eingeklemmt ist. Die Klemmung wird durch einen Blechstreifen 4 bewirkt, der vorteilhafterweise an einem Ende 5 einseitig angekantet ist, da hierdurch das Eindrücken des Blechstreifens wesentlich erleichtert wird.

Fig. 2 zeigt eine andere Möglichkeit, breitflächige Wärmetauscherplatten 6 zu schaffen, die für dekorative Zwecke allseitig geschlossene Sichtflächen aufweisen. Sie werden z. B. für Sonnenblenden, Sichtschutzzäune, Schallschutzwände usw. eingesetzt.

Es können sowohl einstückig 180° umgeschlagene Blechbänder in einem Hohlprofil geformt werden, als auch, wie Fig. 3 zeigt, ein Hohlprofil aus zwei einzelnen, spiegelbildlich zueinandergekehrten U-förmigen Blechprofilen 7, 8 gebildet werden. Das eingeklebte Absorberprofil 9, 10, durch das die Wärmeträgerflüssigkeit geführt wird, bildet die Achse einer solchen Wärmetauscherplatte und ist in diesem Fall mit zweiseitig eingepreßten Flanschen versehen. Wird die Wärmetauscherplatte horizontal eingesetzt, erhalten die Blechprofile im unteren Bereich Bohrungen 11 oder teilweise durchgehende Schlitze 12, damit Schwitzwasser nach unten abtropfen kann.

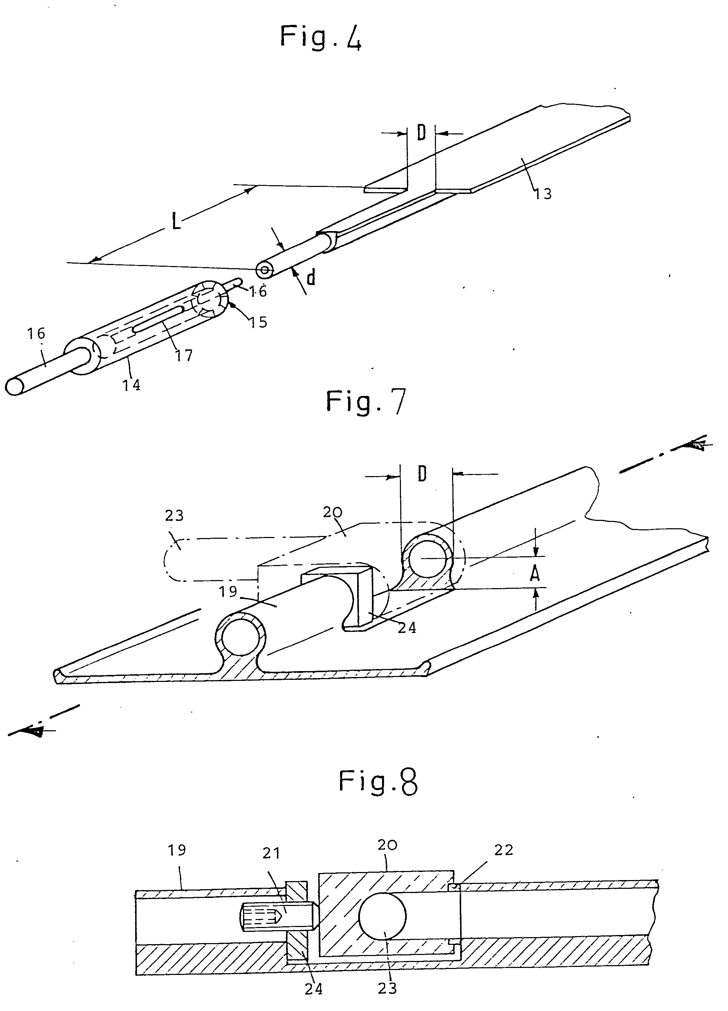

Durch die Absorber-Strangpreßprofile wird eine Wärmeträgerflüssigkeit oder eine Kühlflüssigkeit eingeleitet. Hierfür ist es erforderlich, die Bauelemente untereinander und auch an die Verteilerleitung anzuschließen. Dies geschieht dadurch, daß nach Fig. 4 die Profilflansche 13 endseitig durch Sägen oder Stanzen auf eine begrenzte Länge L entfernt werden und hieran anschließend mittels Spezialfräser außen gerundet werden, so daß weiterführende Rohrsysteme und Rohrverbindungselemente anschließbar sind.

Der Spezialfräser besteht aus einem zylinderförmigen Hohlkörper 14, der an der Stirnseite 15 mit entsprechenden Fräszähnen versehen ist und am gegenüberliegenden Ende einen innenliegenden Zentrierdorn 16 trägt, der auch gleichzeitig als Einspanndorn in eine Handbohrmaschine oder Fräseinheit dient. Die Fräserhülse 14 hat Längsöffnungen 17, damit Kühl- bzw. Schmierflüssigkeit während des Fräsvorganges Zutritt zum Zentrierdorn haben.

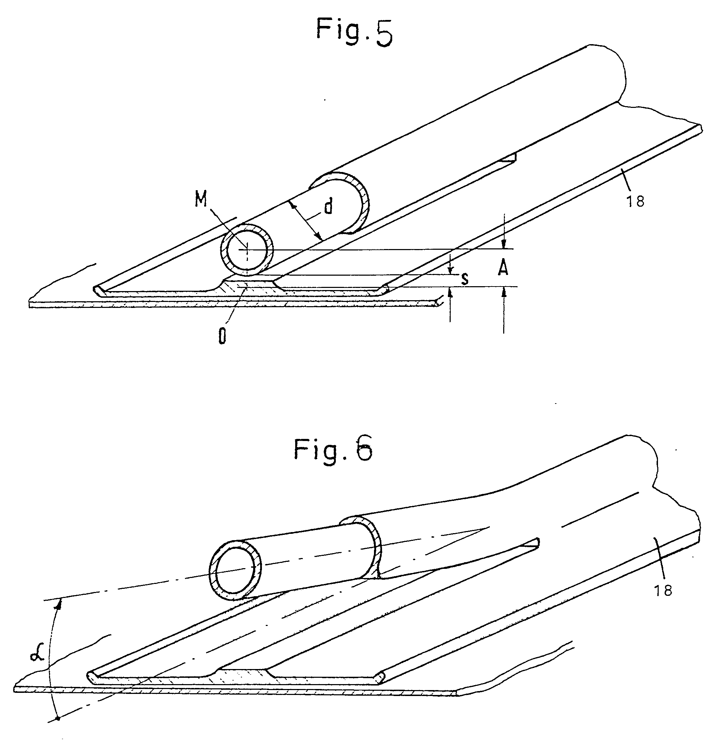

Eine weitere Möglichkeit eine einwandfreie Rundfräsung an einem Strangpreßprofil 18 zu erhalten, ohne eine vorherige Entfernung der Profilflansche durchführen zu müssen, wird in Fig. 5 und 6 dargestellt. Hierbei muß der Abstand « A » der Mitte « M » von der Flanschoberfläche « O » um mindestens Fräserhülsenwanddicke « s » größer sein als der halbe Rohrdurchmesser « d ». Durch weiteres Einsägen des Fräserspaltes kann die freie Rohrlänge vergrößert werden, um ein Anbiegen bis zu einem Biegewinkel $\alpha$ zu ermöglichen, um so entsprechende Rohranschlußglieder befestigen zu können.

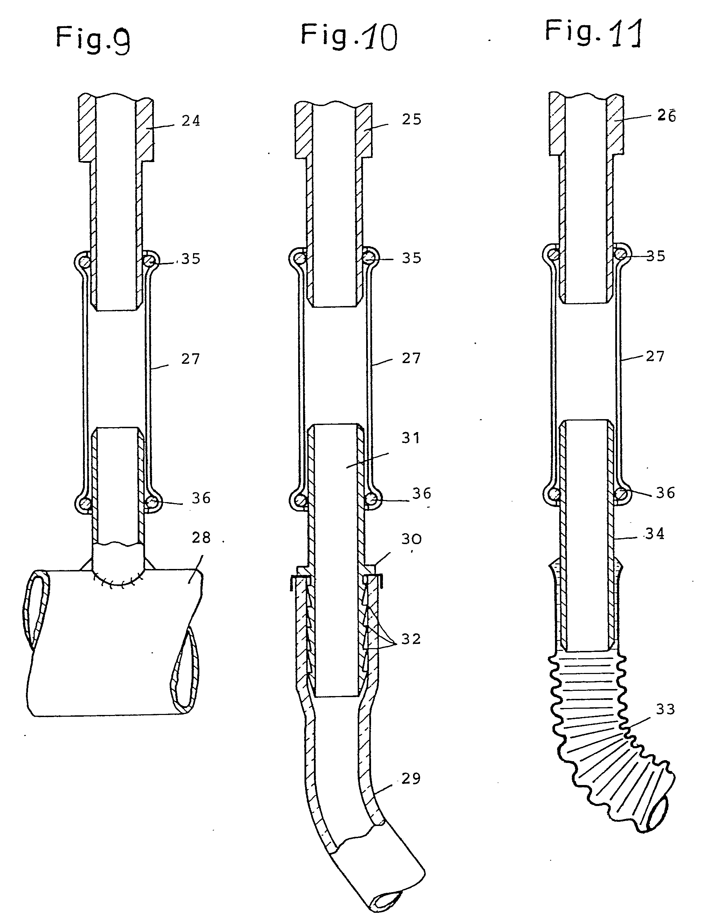

Fig. 7 und 8 zeigen weitere Möglichkeiten der Profilausbildung. Durch Fräsen quer zur Profillängsachse erzielt man am Profilende ein Art Gegenlager 19, z. B. für eine Spezialarmatur mit Anschlußstück 20, wobei das Flanschteil durchgehend erhalten bleibt, weil Maß A = D/2 ist. Dabei wird durch Andrücken der Schraube 21 mit Schlitz oder besser mit Innensechskant in der Mutterscheibe 24 eine Anpressung der Armatur auf die Dichtfläche 22 erzielt. Der Rohranschluß 23 erfolgt hierbei 90° gedreht zur Profillängsachse.

Eine weitere Neuerung des Wärmetauscher-Bausystems besteht in einer einfachen Kombination an und für sich bekannter Rohrelemente, die eine einfache und schnelle Baustellenmontage der einzelnen, endseitig bearbeiteten Absorberprofile an die weiterführenden Verteilerleitungen ermöglicht. Bisher ist bekannt, daß derartig multifunktionale Wärmetauscherelemente mittels Gummischlauch über Schlauchschellen an die Verteilerleitungen angeschlossen werden.

Ebenso sind Verbindungen bekannt, die mittels handelsüblicher Schneidringverschraubungen geschaffen wurden. Alle Verbindungssysteme weisen den Nachteil auf, daß bei der Montage erhebliche manuelle Kräfte angewandt werden müssen, die die Arbeitsbelastung unnötig erhöhen. Aus Sicherheitsgründen ist zu beachten: Schlauchschellen klemmen den Gummischlauch örtlich so stark, daß es hier zu Beschädigungen kommen kann, und eine Dichtheit der Verbindung nicht hundertprozentig gewährleistet ist.

Die neuen Anschlußkombination-Bauglieder für die Rohrenden 24, 25, 26 sind in den Fig. 9, 10, 11 dargestellt. Eine Rohrverbindung kann sowohl starr mittels Preßfitting als auch unter Zwischenschaltung elastischer Rohrglieder, wie z. B. Gummi-Gewebeschlauch oder Stahl-Wellrohre geschaffen werden, ohne daß man mehr als drei Bauteile zur Hand haben muß. Die starre Verbindung besteht aus einem Preßfitting, Fig. 9, wobei der zylindrische Preßfitting 27 so ausgebildet ist, daß er auf der gesamten Länge durchgehend über das anzuschließende Rohrelement 28 mit einem Dichtring 35, 36 überschiebbar ist. Die Verpressung der hiernach unlösbaren Verbindung erfolgt mittels bekannter elektro-mechanischer Preßzangen.

Sind Wärmedehnungen der Bauelemente auszugleichen oder montagebedingte Versetzungen der beiden Anschlußrohrenden zu überbrücken oder Bögen zu verlegen, werden elastische Rohrglieder, wie Fig. 10 und alternativ Fig. 11 zeigt, zwischengeschaltet. Hierzu wird zusätzlich ein Gummi-Gewebeschlauch 29 benötigt, in dem endseitig jeweils ein Einsteckrohrteil 30 eingedrückt wird, das auf der einen Seite einen Rohrquerschnitt 31 aufweist und auf der anderen Seite eine tannenbaumartige Verzahnung 32 auf der Rohraußenseite aufweist. Die Dichtigkeit wird durch die im Schlauch auftretenden Zugspannungen gewährleistet, ein Herausrutschen des Einsteckrohrteils wird durch die Widerhaken der tannenbaumartigen Verzahnung verhindert.

Eine weitere Möglichkeit eines Anschlusses über ein elastisches Rohrglied zeigt Fig. 11. Hier wird ein Metall-Wellschlauch 33 relativ dünner Wanddicke endseitig mit angelöteten oder eingeklebten Rohrteilen 34 versehen, die wiederum mittels Preßfitting 27 angeschlossen werden. Zwecks Ausbildung einer dauerhaft dichten Löt- oder Klebverbindung wird das Ende des Metall-Wellschlauches 33 kelchartig aufgeweitet. Der Metall-Wellschlauch kann ebenso endseitig innen mit Versteifungshülsen versehen werden, die ein direktes Verbinden des Metall-Wellschlauches mit den überschiebbaren Preßfittings ermöglichen. Zwischen Versteifungshülse und Metall-Wellschlauchende wird aus Sicherheitsgründen eine Dichtpaste oder dergleichen vor dem Einschieben angebracht.

Es versteht sich von selbst, daß alle Bauteile aus korrosionsbeständigem Material, vornehmlich Aluminium-Legierung oder Edelstahl, hergestellt sein müssen.

## Ansprüche

1. Wärmetauscher für Hausdächer, Fassaden, Zäune oder dergleichen mit einem Wärmetauscherblech und mindestens einem Wärmetauscherrohr, dadurch gekennzeichnet, daß das Wärmetauscherrohr aus einem T-profilähnlichen Strangpreßprofil (3) besteht, dessen Flanschebene als Kontaktfläche ausgebildet ist, und daß das Strangpreßprofil (3) mit dem Blech über eine elastische Zwischenlage verbunden ist und mit einem federnden Blechstreifen (4) am Wärmetauscherblech (1) befestigt ist, wobei die Enden des federnden Blechstreifens (4) in Sicken (2) des Wärmetauscherblechs (1) eingreifen.

2. Wärmetauscher für Hausdächer, Fassaden, Zäune oder dergleichen mit einem Wärmetauscherblech und mindestens einem Wärmetauscherrohr, dadurch gekennzeichnet, daß das Wärmetauscherblech (1) als Hohlprofil geformt ist, und daß innerhalb des Hohlprofils das Wärmetauscherrohr angeordnet ist, das als Strangpreßprofil nach Art eines Doppel-T-Trägers (9, 10) ausgebildet ist, bei dem das Rohr im Mittelsteg angeordnet ist, und dass das Strangpressprofil mit dem Wärmetauscherblech über eine elastische Zwischenlage verbunden ist.

3. Wärmetauscher nach einem der vorhergehenden Ansprüche, dadurch gekennzeichnet, daß die Zwischenlage zwischen Strangpreßprofil und Wärmetauscherblech aus einer Wärmeleitpaste auf Kunststoff- oder Bitumenbasis mit eingelagerten Metallkörpern besteht.

4. Wärmetauscher nach einem der vorhergehenden Ansprüche, dadurch gekennzeichnet, daß das Strangpreßprofil endseitig in der Flanschebene eingesägt ist und der Rohrendteil über den gesamten Umfang rund ausgeformt ist.

5. Wärmetauscher nach Anspruch 4, dadurch gekennzeichnet, daß das endseitig eingesägte Strangpreßprofil mit dem Rohrteil von der Flanschebene abgebogen ist.

6. Wärmetauscher nach einem der Ansprüche 1 bis 3, dadurch gekennzeichnet, daß die Wärmetauscherrohre an den Enden einen runden Außenumfang aufweisen.

7. Wärmetauscher nach einem der Ansprüche 1 bis 3 oder 6, dadurch gekennzeichnet, daß der Rohrteil des Wärmetauscherrohres endseitig unterbrochen ist.

8. Wärmetauscher nach Anspruch 7, dadurch gekennzeichnet, daß in der Unterbrechung des Rohrteiles ein Anschlußstück (20) befestigt ist.

9. Wärmetauscher nach einem der vorhergehenden Ansprüche, dadurch gekennzeichnet, daß die Enden des Strangpreßprofils mit einem Rohrfitting (27) an einem Verteilerrohr (28) unter Zwischenschaltung eines Einsecknippels (30) an einem Gummi-Gewebeschlauch (29) oder an einem Wellrohr (33) angeschlossen sind.

## Claims

1. Heat exchanger placed on house roofs, house fronts, fences, and to similar locations, comprising a heat exchange sheet and at least one heat exchange channel, characterized by forming the heat exchange channel from a T-shaped extrusion profile (3), the face of which forms the contact plane, and further characterized by the said extrusion profile (3) being joined to the sheet by an elastic interlayer and affixed in the heat exchange sheet by means of a spring metal strip (4), the edges of which snap into the corrugations (2) of the heat exchange sheet.

2. Heat exchanger attached to house roofs, house fronts, fences and to similar locations, characterized by the heat exchange sheet formed as a hollow profile, with the heat exchange channel placed in the interior of this hollow profile which is extruded in the double T-shape, the channel being situated in the central stem, and the extrusion profile being joined to the heat exchange sheet by means of an elastic interlayer.

3. Heat exchanger according to one of the preceding claims, characterized by the interlayer joining the extrusion profile and the heat exchange sheet being a heat conductive paste consisting of synthetic materials or of bitumen, filled with metallic grains.

4. Heat exchanger according to one of the preceding claims, wherein the extruded profile is carved at its end into the face plane and the tube ending is completely circular in shape.

5. Heat exchanger according to claim 4, wherein the carved-in extrusion profile has the tube ending bent-off from the face plane.

6. Heat exchanger according to one of the claim 1-3, wherein the heat exchange channels have a circular perimeter.

7. Heat exchanger according to claims 1 to 3, or according to claim 6, wherein the channel part of the heat exchanger is interrupted at its end.

8. Heat exchanger according to claim 7, wherein in the interruption of the channel part there is inserted a connector (20).

9. Heat exchanger according to one of the preceding claims, wherein the endings of the extrusion profile are connected with a tube fitting (27) on a manifold (28) by means of a male nipple (30) to a textile reinforced rubber-covered hose (29) or to a corrugated pipe (33).

**Revendications**

1. Echangeur de chaleur pour toitures, façades, clôtures ou analogues, comportant une tôle d'échangeur de chaleur et au moins un tube d'échangeur de chaleur, caractérisé en ce que le tube d'échangeur de chaleur se compose d'un profilé extrudé (3) semblable à un profil en T dont le plan d'aile est agencé comme une surface de contact, en ce que le profilé extrudé (3) est relié à la tôle par l'intermédiaire d'une couche intercalaire élastique et est fixé au moyen d'une bande élastique (4) de tôle sur une tôle d'échangeur de chaleur (1), les extrémités de la bande de tôle élastique (4) s'éccrochant dans des moulures (2) de la tôle d'échangeur de chaleur (1).

2. Echangeur de chaleur pour toitures, façades, clôtures ou analogues, comportant une tôle d'échangeur de chaleur et au moins un tube d'échangeur de chaleur, caractérisé en ce la tôle d'échangeur de chaleur (1) est formée comme un profilé creux, en ce qu'il est prévu à l'intérieur du profilé creux le tube d'échangeur de chaleur qui est agencé comme un profilé extrudé à la façon d'une poutre en double T, où le tube est disposé dans l'âme centrale, et en ce que le profilé extrudé est relié à la tôle d'échangeur de chaleur par l'intermédiaire d'une couche intercalaire élastique.

3. Echangeur de chaleur selon l'une des revendications précédentes, caractérisé en ce que la couche intercalaire située entre le profilé extrudé et la tôle d'échangeur de chaleur se compose d'un enduit conducteur de la chaleur à base de matière plastique ou de bitume et contenant des corps métalliques.

4. Echangeur de chaleur selon l'une des revendications précédentes, caractérisé en ce que le profilé extrudé est découpé par sciage à son extrémité dans le plan de l'aile et en ce que la partie extrême de tube est pourvue d'un profil arrondi sur le même pourtour.

5. Echangeur de chaleur selon la revendication 4, caractérisé en ce que le profilé extrudé découpé à son extrémité est cintré avec la partie tubulaire à partir du plan de l'aile.

6. Echangeur de chaleur selon l'une des revendications 1 à 3, caractérisé en ce que les tubes d'échangeur de chaleur comportent une périphérie extérieure arrondie aux extrémités.

7. Echangeur de chaleur selon l'une des revendications 1 à 3 ou 6, caractérisé en ce que la partie tubulaire du tube d'échangeur de chaleur est interrompue en voisinage à son extrémité.

8. Echangeur de chaleur selon la revendication 7, caractérisé en ce qu'un organe de raccordement (20) est fixé dans l'interruption de la partie tubulaire.

9. Echangeur de chaleur selon l'une des revendications précédentes, caractérisé en ce que les extrémités du profilé extrudé sont reliées au moyen d'un raccord tubulaire (27) à un tube de distribution (28) avec interposition d'une tubulure d'emboîtement (30) sur un flexible en tissu caoutchouté (29) ou sur un tube ondulé (33).

# Fig. 1

# Fig. 2

# Fig. 3

## Fig. 4

## Fig. 7

## Fig. 8

2

## Fig.5

## Fig.6

Fig.9  Fig.10  Fig.11